# FASCICULE DE BREVET EUROPEEN

(11) **EP 2 867 015 B1**
(45) Date de publication et mention de la délivrance du brevet: **13.04.2016**
(21) Numéro de dépôt: 13732455.4
(22) Date de dépôt: 26.06.2013
(51) Int. Cl.: B32B 7/04, B32B 21/02, B32B 27/30, B32B 3/12

(54) **PEAU DE PIÈCE STRUCTURELLE, NOTAMMENT POUR VÉHICULE AUTOMOBILE**
AUSSENHAUT EINES BAUTEILS, INSBESONDERE FÜR EIN KRAFTFAHRZEUG
SKIN OF A STRUCTURAL PART, IN PARTICULAR FOR A MOTOR VEHICLE

(30) Priorité: 27.06.2012 FR 1256099
(43) Date de publication de la demande: 06.05.2015
(73) Titulaire: Faurecia Automotive Industrie, 92000 Nanterre (FR)
(72) Inventeur: DUVAL, Arnaud, F-08000 Charleville-Mezières (FR); DECORME, Jacques, 01200 BELLEGARDE SUR VALSERINE (FR)
(74) Mandataire: Blot, Philippe Robert Emile
(86) Numéro de dépôt international: PCT/EP2013/063391
(87) Numéro de publication internationale: WO 2014/001392

(56) Documents cités:
- DE-U1-202006 017 697
- DE-U1-202007 014 441
- US-A1- 2009 313 931

## Description

La présente invention concerne une peau pour une pièce structurelle, notamment de véhicule automobile.

En particulier, l'invention concerne une pièce structurelle du type comportant deux peaux et un écarteur interposé entre ces deux peaux. Une telle pièce structurelle est par exemple destinée à former un plancher de véhicule automobile, tel qu'un plancher d'habitacle ou un plancher et un faux plancher de coffre, un panneau de portière, une tablette arrière, un arrière de siège de rang 2 ou 3, ou encore une paroi délimitant un espace de rangement, certaines de ces pièces pouvant présenter des formes ou des reliefs très prononcés.

Plus particulièrement, l'invention concerne une pièce structurelle dont les peaux sont composées essentiellement de fibres de bois et d'une résine thermodurcissable. De telles peaux ont l'avantage d'être en grande partie d'origine naturelle, et même totalement d'origine naturelle lorsque la résine est elle-même bio-sourcée.

Habituellement, l'écarteur de la pièce structurelle est réalisé dans un matériau léger, par exemple en carton. Or, il est connu que le carton est particulièrement sensible à l'humidité. Il est donc important d'assurer une bonne étanchéité des peaux de la pièce structurelle, afin d'empêcher une détérioration de l'écarteur carton par des infiltrations d'humidité.

On connaît déjà, dans l'état de la technique, une peau pour pièce structurelle, munie d'un film d'étanchéité rapporté sur sa surface extérieure. Un tel film d'étanchéité n'est pas toujours satisfaisant, notamment dans le cas où la peau présente une forme complexe, car il arrive que le film d'étanchéité soit déchiré lors du thermoformage de la peau.

D'autres solutions pour améliorer l'étanchéité d'une peau de pièce structurelle ont été envisagées dans l'état de la technique, mais ces solutions augmentent généralement de manière indésirable la masse et/ou le coût de la peau.

Par ailleurs, il apparaît qu'une pièce structurelle à base de fibres de bois parvient difficilement à se conformer aux nouveaux cahiers des charges des constructeurs automobiles, qui évoluent vers des exigences accrues en terme de comportements à la flexion, tout en exigeant des poids moindres. L'augmentation du taux de résine, qui pourrait constituer une réponse à cette évolution en accroissant la rigidité de la peau, se heurte à un problème de procédé. En effet au-delà d'un taux de 40% de résine, la peau colle aux parties de moule de thermoformage en contact, rendant leur extraction impossible. L'utilisation de non-tissé ou film de démoulage, pouvant également servir à l'étanchéité, étant comme indiqué précédemment insatisfaisante dans le cas de pièces fortement déformées, il n'est donc pas possible de réaliser des pièces de ce type avec un bon compromis poids / comportement à la flexion.

L'invention a notamment pour but de remédier à ces inconvénients, en fournissant une peau pour une pièce structurelle du type précédemment décrit, présentant une bonne étanchéité tout en conservant une faible masse, des propriétés mécaniques améliorées et un faible coût.

A cet effet, l'invention a notamment pour objet une peau pour une pièce structurelle, notamment de véhicule automobile, comportant :
- un premier mat de feutre, présentant une première surface extérieure et une première surface intérieure opposées,
- un second mat de feutre, présentant une seconde surface extérieure et une seconde surface intérieure opposées, et
- une nappe de fibres, intercalée entre ladite première surface intérieure du premier mat de feutre et ladite seconde surface intérieure du second mat de feutre, caractérisée en ce qu'au moins l'un parmi le premier et le second mat de feutre porte, sur sa surface intérieure, une couche de résine.

La peau selon l'invention comporte, en son coeur, une couche à forte concentration de résine. Une telle couche à forte concentration de résine présente une bonne étanchéité, et permet donc d'améliorer l'étanchéité de la peau.

En outre, au cours du procédé de fabrication de la peau, qui comporte, comme cela sera décrit ultérieurement, le pressage de la peau à une température de réticulation de la résine, la couche de résine se combine avec la nappe de fibres pour former un composite à l'intérieur de la peau. Ce composite permet de renforcer mécaniquement la peau en plus de former une couche étanche au coeur de cette peau.

On notera que, le composite étant formé au coeur de la peau, et conjointement à la peau elle-même, celui-ci reste présent dans cette peau même en cas de forme complexe de la peau.

Une peau selon l'invention peut comporter en outre l'une ou plusieurs des caractéristiques suivantes, prises seules ou selon toutes les combinaisons techniquement possibles.
- Au moins l'un parmi le premier et le second mat de feutre comprend des fibres, de préférence des fibres de bois, et une résine, de préférence acrylique, liant les fibres.
- Au moins l'un parmi le premier et le second mat de feutre comprend, en masse, entre 5% et 25% de résine.
- Chaque mat de feutre présente une masse surfacique comprise entre 300 g/m² et 800 g/m², de préférence sensiblement égale à 600 g/m².
- La couche de résine présente une masse comprise entre 15 et 20% de la masse de l'ensemble formé par cette couche de résine et le premier ou second mat de feutre portant cette couche de résine.
- La nappe comprend des fibres longues, de longueur supérieure à 20 mm.

L'invention concerne également une pièce structurelle, notamment de véhicule automobile, caractérisé en ce qu'elle comporte deux peaux telles que définies précédemment, et un écarteur intercalé entre les deux peaux.

L'invention concerne enfin un procédé de fabrication d'une peau pour une pièce structurelle, caractérisé en ce qu'il comporte :
- une étape d'apposition d'une première couche de résine sur une première surface intérieure d'un premier mat de feutre,
- une étape de disposition du premier mat de feutre, portant la première couche de résine, dans un moule,
- une étape d'empilement d'une nappe de fibres sur la première couche de résine, et d'un second mat de feutre sur la nappe de fibres,
- une étape de compression de l'empilement formée par le premier mat de feutre, la première couche de résine, la nappe et le second mat de feutre.

Avantageusement, le procédé de fabrication comporte une étape d'apposition d'une seconde couche de résine sur une seconde surface intérieure du second mat de feutre, ladite seconde couche de résine étant intercalée entre la nappe de fibres et le second mat de feutre au cours de l'étape d'empilement.

Avantageusement, l'étape d'apposition de la couche de résine est réalisée par pulvérisation de résine sur la surface intérieure du mat de feutre.

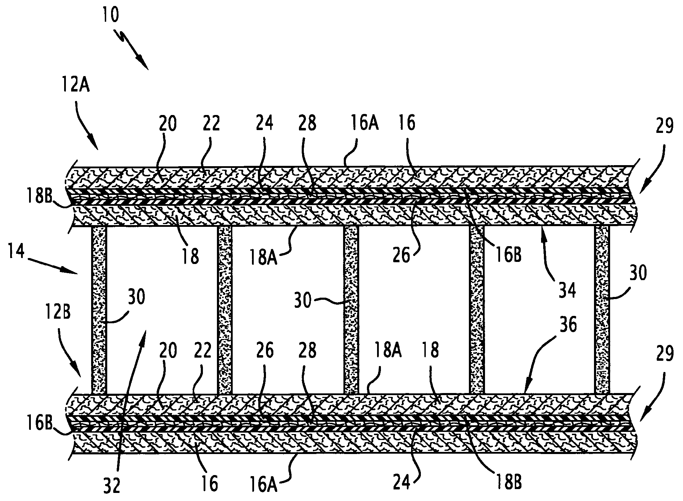

L'invention sera mieux comprise à la lecture de la description qui va suivre, donnée uniquement à titre d'exemple et faite en se référant à la figure unique, représentant une vue partielle en coupe d'une pièce structurelle d'équipement, comprenant au moins une peau selon un exemple de mode de réalisation de l'invention.

On a représenté sur la figure une pièce structurelle d'équipement 10 de véhicule automobile selon un exemple de mode de réalisation de l'invention.

Cette pièce structurelle 10 est par exemple destinée à former un plancher de véhicule automobile, tel qu'un plancher d'habitacle ou un plancher et un faux plancher de coffre, un panneau de portière, une tablette arrière, un arrière de siège de rang 2 ou 3, ou une paroi délimitant un espace de rangement.

La pièce structurelle 10 comporte une première peau 12A, une deuxième peau 12B, et un écarteur 14 disposé entre les première 12A et seconde 12B peaux. Chacune des première 12A et seconde 12B peaux est fixée sur l'écarteur 14.

Dans l'exemple représenté, les première 12A et seconde 12B peaux sont identiques. Seule la première peau 12A sera donc décrite ci-dessous.

La première peau 12A comporte un premier mat de feutre 16, présentant une première surface extérieure 16A et une première surface intérieure 16B opposées.

La première peau 12A comporte également un second mat de feutre 18, présentant une seconde surface extérieure 18A et une seconde surface intérieure 18B. La première surface intérieure 16B est disposée en regard de la seconde surface intérieure 18B.

Conformément au mode de réalisation décrit, chaque mat 16, 18 comporte des fibres 20 et une résine 22 destinée à lier les fibres 20 entre elles, après réticulation. De préférence, chaque mat 16, 18 comprend au moins 50% de fibres de bois, en particulier de fibres de bois courtes, par rapport à la masse totale de ce mat 16, 18.

Dans la présente description, on appelle « fibres de bois » des fibres de cellulose obtenues notamment par découpe d'arbres comprenant un tronc, comme par exemple des pins. Comme cela est bien connu, le bois est un matériau organique composé notamment de fibres de cellulose enrobées dans une matrice de lignine. Le bois se trouve dans le tronc des arbres.

Les fibres de bois sont avantageusement obtenues à partir des chutes résultant de la séparation entre le coeur de l'arbre d'une part, et le reste du tronc et de l'écorce d'autre part. Les fibres de bois sont obtenues par délignage des chutes.

Comme indiqué précédemment, la proportion massique de fibres de bois dans chaque mat 16, 18 est supérieure à 50%, et est de préférence comprise entre 60 et 90%, par exemple entre 60 et 75% ou encore entre 80 et 90%, par rapport à la masse totale du mat 16, 18.

Les fibres de bois de mat 16, 18 sont dites courtes, c'est-à-dire que leur longueur est strictement inférieure à 20 mm. Cette longueur est avantageusement comprise entre 5 et 15 mm, par exemple entre 7 et 12 mm.

On notera que chaque mat 16, 18 peut comporter en outre des fibres synthétiques, par exemple des fibres de polyester, des fibres bicomposantes à base de polyester ou autres.

De préférence, les mats 16, 18 sont formés par des moyens conventionnels tels que ceux utilisés pour la réalisation de nappes précurseurs aux panneaux de fibres de bois connus comme MDF (acronyme anglais pour « Medium Density Fiberboard »). Dans de tels procédés, la résine est pulvérisée simultanément à la constitution du mat, si bien qu'elle se trouve répartie de manière homogène à l'intérieur du mat.

La résine 22, une fois réticulée sous l'effet de la température comme cela sera décrit ultérieurement, par exemple durant une étape de thermoformage dans un moule, lie mécaniquement les fibres 20 entre elles. Le pourcentage massique de résine 22 contenue dans chaque mat 16, 18 est généralement inférieur à 25%, de préférence compris entre 5 et 25%. Par exemple, ce pourcentage massique est compris entre 8 et 20% de la masse du mat 16, 18.

La résine 22 est avantageusement une résine thermodurcissable qui durcit de manière irréversible, notamment par réticulation chimique, sous l'effet de la chaleur ou d'une radiation. Une telle résine se présente généralement sous forme liquide et est appliquée par pulvérisation avant d'être réticulée, et présente une forme solide une fois réticulée.

Des exemples de résines thermodurcissables sont la résine acrylique, la résine méthacrylique, la résine phénolique, la résine polyuréthane ou la résine époxy. Des résines bio-sourcée telles les résines de type furane, où le furfural remplace le formaldéhyde dans la production de résine phénolique, sont également envisageables.

Avantageusement, chaque mat de feutre 16, 18 présente une masse surfacique comprise entre 300 g/m² et 800 g/m², de préférence sensiblement égale à 600 g/m². Ainsi, chaque feuille 12A, 12B présente une masse surfacique comprise entre 600 g/m² et 1600 g/m², de préférence sensiblement égale à 1200 g/m².

Conformément au mode de réalisation décrit, le premier mat de feutre 16 comporte, sur ladite première surface intérieure 16B, une première couche de résine 24. De même, le second mat de feutre 18 comporte, sur ladite seconde surface intérieure 18B, une seconde couche de résine 26.

De préférence, la première 24, respectivement seconde 26, couche de résine présente une masse comprise entre 15 et 20% de la masse de l'ensemble formé par cette première 24, respectivement seconde 26, couche de résine et le premier 16, respectivement second 18, mat de feutre correspondant.

Ces couches de résine 24, 26 sont préférentiellement appliquées sur le mat en formation, par exemple par pulvérisation. Dans ce cas un poste de dépôt de résine en surface est ajouté en fin de la ligne de production du mat.

En variante, la résine est déposée sur le mat de feutre lorsqu'il se présente sous forme de panneau avant son introduction dans le moule de thermoformage. Dans ce dernier cas c'est l'opérateur responsable de la conduite du moule qui déposera la résine à l'aide d'un pistolet de pulvérisation approprié.

Avantageusement, la résine formant la couche de résine 24, 26 est de même nature que la résine 22, notamment une résine thermodurcissable qui durcit de manière irréversible, notamment par réticulation chimique, sous l'effet de la chaleur ou d'une radiation. Des exemples de résines thermodurcissables sont par exemple la résine acrylique, la résine méthacrylique, la résine phénolique, la résine polyuréthane, la résine époxy ou une résine dérivée du furfural.

En variante, seul l'un des premier 16 et second 18 mats de feutre comporte une telle couche de résine.

Une nappe de fibres 28 est intercalée entre les première 24 et seconde 26 couches de résine 26, 28, donc entre la première surface intérieure 16B et la seconde surface intérieure 18B.

Avantageusement, la nappe 28 comprend des fibres longues, c'est-à-dire de longueur supérieure à 20 mm. Les fibres de la nappe 28 comportent par exemple des fibres végétales, notamment des fibres de kenaf, d'étoupe ou filasse de lin, de sisal, coco ou toute autre fibre végétale. Des fibres longues artificielles peuvent également être utilisées telles des fibres polymériques ou céramiques.

La masse surfacique de cette couche 28 représente entre 10% et 40% de la masse surfacique de chaque mat de feutre 16, 18, préférentiellement entre 15 et 30%.

Comme cela sera décrit ultérieurement, la résine de la première 24, respectivement seconde 26, couche de résine migre partiellement à l'intérieur du premier 16, respectivement second 18, mat correspondant lors de la fabrication de la peau 12A, avec un gradient de concentration.

Une autre partie de la résine de chaque couche de résine 24, 26 migre à l'intérieur de la nappe 28, de façon à se lier à cette nappe 28 en formant ainsi, après réticulation, un composite 29.

La concentration de la résine à l'intérieur du composite 29 est généralement très élevée, notamment comprise entre 30% et 80 % du poids du composite, préférentiellement entre 40% et 70%. Ceci est une conséquence de la faible masse surfacique de la couche 28.

Ainsi, les premier 16 et second 18 mats sont liés entre eaux par l'intermédiaire des couches de résine 24, 26 et de ce composite 29.

On notera que le composite 29 associé aux couches de résine 24, 26 permet d'assurer une bonne étanchéité de la peau 12A, du fait de sa forte concentration en résine, qui l'apparente à un film.

L'écarteur 14 est réalisé à base d'une structure alvéolaire ou en nid d'abeilles. Ainsi, l'écarteur 14 présente une pluralité de parois 30 sensiblement perpendiculaires à un plan moyen de la pièce, ces parois 30 délimitant des espaces centraux 32 de contours fermés formant les alvéoles. Ainsi, chaque espace central ou alvéole 32 débouche en regard de la surface extérieure 18A du second mat 18 de chaque feuille 12A, 12B.

Par ailleurs, la tranche des parois 30 délimite des faces opposées 34, 36 de l'écarteur 14, sur laquelle sont assemblées respectivement les première 12A et seconde 12B feuilles. Chaque feuille 12A, 12B est fixée sur l'écarteur 14 de manière classique, par exemple au moyen d'un liant. Ce liant est par exemple une colle, un film, ou un autre matériau adhésif compatible avec la composition des feuilles 12A, 12B et de l'écarteur 14. Ce liant peut faire partie des familles époxy, acrylique, méthacrylate, polyuréthane ou acétate de polyvinyle.

L'écarteur 14 est avantageusement réalisé dans un matériau léger, tel que du papier ou du carton. La masse surfacique de l'écarteur 14 est faible, notamment inférieure à 2000 g/m², et avantageusement comprise entre 50 g/m² et 1200 g/m². De préférence, cette masse surfacique est inférieure à 1000 g/m², et sensiblement comprise entre 400 g/m² et 800 g/m². La masse surfacique de l'écarteur 14 est ainsi inférieure à la masse surfacique de chaque feuille 12A, 12B, et avantageusement 1,5 à 2,5 fois inférieure à la masse surfacique de chaque feuille 12a, 12b.

Ainsi, la pièce 10 présente une légèreté adéquate, du fait de la faible densité de l'écarteur 14.

L'écarteur 14 présente avantageusement une épaisseur supérieure à 2 mm, par exemple comprise entre 2 et 100 mm, notamment entre 5 et 20 mm, avantageusement sensiblement égale à 15 mm, prise entre ses faces opposées 34, 36.

Un exemple de procédé de fabrication d'une peau 12A pour la pièce structurelle 10 sera décrit ci-dessous.

Le procédé de fabrication comporte une première étape d'apposition de la première couche de résine 24 sur ladite première surface intérieure 16B du premier mat de feutre 16. Cette étape d'apposition est de préférence réalisée par pulvérisation de résine sur la première surface intérieure 16B du mat de feutre 16.

Comme indiqué précédemment, la quantité de résine pulvérisée est telle que la première couche de résine 24 ainsi formée présente une masse comprise entre 15 et 20% de la masse de l'ensemble formé par cette première couche de résine 24 et le premier mat 16.

Parallèlement, le procédé comporte une étape similaire d'apposition de la seconde couche de résine 26 sur ladite seconde surface intérieure 18B du second mat de feutre 18.

Le procédé comporte ensuite une étape de disposition du premier mat de feutre 16, portant la première couche de résine 24, dans un moule.

Le procédé comporte ensuite une étape d'empilement de la nappe de fibres 28 sur la première couche de résine 24, et du second mat de feutre 18 portant la seconde couche de résine 26, de sorte que la nappe de fibres 18 se retrouve intercalée entre les première 24 et seconde 26 couches de résine.

Le procédé comporte ensuite une étape de compression, dans le moule, de l'empilement ainsi formé. Avantageusement, cette étape de compression est réalisée en portant le moule à la température de réticulation de la résine.

Au cours de cette étape de compression, une partie de la résine de chaque couche de résine 24, 26 migre dans le mat 16, 18 correspondant d'une part, et dans la nappe de fibres 28 d'autre part.

La nappe de fibres 28 ainsi imprégnée de résine forme le composite 29 assurant l'étanchéité de la peau.

En outre, du fait que la résine de chaque couche de résine 24, 26 migre dans les mats 16, 18 et dans la nappe 28, on réalise ainsi une forte adhésion des mats 16, 18 et de la nappe 28 entre eux.

Il convient de noter que, lors du thermoformage, une partie de la résine de chaque couche de résine 24, 26 migre à travers les mats 16, 18, s'ajoutant à la résine 22 déjà présente avec un gradient de concentration décroissant jusqu'à la surface des mats 16, 18. On peut ainsi considérer que la concentration de résine sur les surfaces 16A et 16B n'est que légèrement supérieure à la concentration d'origine de la résine dans les mat 16A, 16B (soit entre 5% et 25% du poids total du mat). De ce fait il n'y a pas de risque de collage des peaux avec le moule.

L'apport de fibres longues au coeur des peaux 12A, 12B à travers la formation du composite 19 permet d'accroître les propriétés mécaniques de ces peaux 12A, 12B, donc de l'ensemble de la structure sandwich, autorisant un meilleur comportement à la flexion.

Ce renforcement est sensible même si le pourcentage en poids des fibres longues est faible. Par exemple en insérant un voile de fibres longues de 60 g/m² entre les mats 16 et 18 pesant chacun 600 g/m² il est possible de diviser par deux la flèche résiduelle après des tests de flexion.

Les fibres longues sont par exemple formées par des fibres naturelles végétales, telles que l'étoupe de lin (d'une longueur entre 4 et 10 cm), les fibres de lin longues (50 cm à 80 cm), des fibres de kenaf, de jute, ou également par des fibres ou des filaments continus d'origine artificielle telles que des fibres de polyester téréphtalate (PET), de polyamide (PA) ou tout autre polymère, ou encore des fibres ou filaments de céramique.

Ces fibres ou filaments sont habituellement disponibles sous formes de voiles secs (non lié) ou de « prepregs » (voiles pré-imprégnés). Dans ce dernier cas une résine thermodurcissable non réticulée est déjà présente dans le voile et participera à la logique de formation des peaux en complément à la résine des couches 24, 26 et à la résine 22 déjà présente dans les mats 16A, 16B. Un exemple de voile manipulable sec ou pré imprégné (« prepreg ») à base de fibres végétales est décrit dans la demande française n°11 60101.

La résine d'imprégnation du « prepreg » est par exemple de même nature que les résines des couches 24, 26 ou que la résine 22, ou compatible avec ces dernières (affinité chimique et température de réticulation proche).

Ainsi ce procédé permet :
- de fournir des feuilles 12A, 12B, éventuellement totalement d'origine naturelle et bon marché, qui soient imperméables et qui puissent servir de peaux à des structures composites de type sandwich ou autres avec des propriétés mécaniques améliorées, et
- de permettre le thermoformage de ces peaux 12A, 12B et de la structure sandwich sans risque de collage au moule de thermoformage, et ceci même si cette structure composite doit adopter des formes complexes rendant impossible l'utilisation de feuilles de démoulage,
et cela en utilisant :
- d'une part des mats de base réalisables par les procédés conventionnels, utilisant des fibres courtes de bois, et
- d'autre part des voiles ou « prepregs » également disponibles et manipulables dans un contexte industriel.

On notera toutefois que le temps de cycle du procédé (temps de réalisation d'une pièce) augmente légèrement du fait de la nécessité d'empiler plus de couches dans le moule. Ce temps additionnel ne représente cependant que 5% du temps de cycle complet. Il n'impacte donc que faiblement sur le coût global de fabrication de la pièce, ce surcoût étant largement compensé par l'économie due au gain de poids permis par le renfort mécanique que constitue le composite 19.

La feuille 12A ainsi réalisée peut être utilisée pour fabriquer une pièce structurelle 10 selon tout procédé connu, en combinaison avec une autre feuille 12B, réalisée de préférence de la même manière par le procédé de fabrication précédemment décrit, et un écarteur 14.

On notera que le procédé selon l'invention est particulièrement adapté pour réaliser des pièces non planes présentant des reliefs, du fait que le composite étanche 29 est formé au coeur de chaque peau 12A, 12B, et n'est donc pas altéré en cas de thermoformage de cette peau.

On notera que l'invention n'est pas limitée au mode de réalisation précédemment décrit, et pourrait présenter diverses variantes sans sortir du cadre des revendications.

Par exemple, seule l'une des peaux 12A pourrait comporter un composite 29 tel que décrit précédemment. Dans ce cas, l'autre peau 12B pourrait être réalisée selon tout procédé connu.

Par ailleurs, le procédé de fabrication selon l'invention pourrait ne comporter qu'une étape d'apposition d'une couche de résine 24 sur un seul des mats de feutre 16. Dans ce cas, l'autre mat de feutre 18 serait rapporté sur le composite 29 au moyen d'un liant.

## Revendications

1. Peau (12A, 12B) pour une pièce structurelle (10), notamment de véhicule automobile, comportant :
- un premier mat de feutre (16), présentant une première surface extérieure (16A) et une première surface intérieure (16B) opposées,
- un second mat de feutre (18), présentant une seconde surface extérieure (18A) et une seconde surface intérieure (18B) opposées, et
- une nappe de fibres (28), intercalée entre ladite première surface intérieure (16B) du premier mat de feutre (16) et ladite seconde surface intérieure (18B) du second mat de feutre (18),
**caractérisée en ce qu'**au moins l'un parmi le premier (16) et le second (18) mat de feutre porte, sur sa surface intérieure (16B, 18B), une couche de résine (24, 26).

2. Peau (12A, 12B) selon la revendication 1, dans laquelle au moins l'un parmi le premier (16) et le second (18) mat de feutre comprend des fibres (20), de préférence des fibres de bois, et une résine (22), de préférence acrylique, liant les fibres (20).

3. Peau (12A, 12B) selon la revendication 2, dans lequel au moins l'un parmi le premier (16) et le second (18) mat de feutre comprend, en masse, entre 5% et 25% de résine.

4. Peau (12A, 12B) selon l'une quelconque des revendications précédentes, dans laquelle chaque mat de feutre (16, 18) présente une masse surfacique comprise entre 300 g/m² et 800 g/m², de préférence sensiblement égale à 600 g/m².

5. Peau (12A, 12B) selon l'une quelconque des revendications précédentes, dans laquelle la couche de résine (24, 26) présente une masse comprise entre 15 et 20% de la masse de l'ensemble formé par cette couche de résine (24, 26) et le premier (16) ou second (18) mat de feutre portant cette couche de résine (24, 26).

6. Peau (12A, 12B) selon l'une quelconque des revendications précédentes, dans laquelle la nappe (28) comprend des fibres longues, de longueur supérieure à 20 mm.

7. Pièce structurelle (10), notamment de véhicule automobile, **caractérisé en ce qu'**elle comporte deux peaux (12A, 12B) selon l'une quelconque des revendications 1 à 6, et un écarteur (14) intercalé entre les deux peaux (12A, 12B).

8. Procédé de fabrication d'une peau (12A, 12B) pour une pièce structurelle (10), **caractérisé en ce qu'**il comporte :
- une étape d'apposition d'une première couche de résine (24) sur une première surface intérieure (16B) d'un premier mat de feutre (16),
- une étape de disposition du premier mat de feutre (16), portant la première couche de résine (24), dans un moule,
- une étape d'empilement d'une nappe de fibres (28) sur la première couche de résine (24), et d'un second mat de feutre (18) sur la nappe de fibres (28),
- une étape de compression de l'empilement formée par le premier mat de feutre (16), la première couche de résine (24), la nappe (28) et le second mat de feutre (28).

9. Procédé de fabrication selon la revendication 8, comportant une étape d'apposition d'une seconde couche de résine (26) sur une seconde surface intérieure (18B) du second mat de feutre (18), ladite seconde couche de résine (26) étant intercalée entre la nappe de fibres (28) et le second mat de feutre (18) au cours de l'étape d'empilement.

10. Procédé de fabrication selon la revendication 8 ou 9, dans lequel l'étape d'apposition de la couche de résine (24, 26) est réalisée par pulvérisation de résine sur la surface intérieure (16B, 18B) du mat de feutre (16, 18).

## Patentansprüche

1. Haut (12A, 12B) für ein Bauteil (10), insbesondere für ein Kraftfahrzeug, aufweisend:
- eine erste Filzmatte (16) mit einer ersten äußeren Fläche (16A) und einer ersten inneren Fläche (16B), die einander gegenüberliegen,
- eine zweite Filzmatte (18) mit einer zweiten äußeren Fläche (18A) und einer zweiten inneren Fläche (18B), die einander gegenüberliegen, und
- ein Fasertuch (28), welches zwischen der ersten inneren Fläche (16B) der ersten Filzmatte (16) und der zweiten inneren Fläche (18B) der zweiten Filzmatte (18) angeordnet ist,
**dadurch gekennzeichnet, dass** mindestens eine der ersten (16) und der zweiten (18) Filzmatte auf ihrer inneren Fläche (16B, 18B) eine Harzschicht (24, 26) trägt.

2. Haut (12A, 12B) nach Anspruch 1, wobei mindestens eine der ersten (16) und der zweiten (18) Filzmatte Fasern (20), vorzugsweise Holzfasern, und ein Harz (22), vorzugsweise ein Acrylharz, welches die Fasern (20) verbindet, aufweist.

3. Haut (12A, 12B) nach Anspruch 2, wobei mindestens eine der ersten (16) und der zweiten (18) Filzmatte zwischen 5 Gewichts-% und 25 Gewichts-% Harz aufweist.

4. Haut (12A, 12B) nach einem der vorhergehenden Ansprüche, wobei jede Filzmatte (16, 18) ein Flächengewicht zwischen 300 g/m² und 800 g/m², vorzugsweise im Wesentlichen gleich 600 g/m² aufweist.

5. Haut (12A, 12B) nach einem der vorhergehenden Ansprüche, wobei die Harzschicht (24, 26) ein Gewicht zwischen 15 und 20% des Gewichts der Anordnung aufweist, welche durch diese Harzschicht (24, 26) und die erste (16) oder zweite (18) Filzmatte, welche diese Harzschicht (24, 26) trägt, gebildet ist.

6. Haut (12A, 12B) nach einem der vorhergehenden Ansprüche, wobei das Tuch (28) Langfasern mit einer Länge größer als 20 mm aufweist.

7. Bauteil (10), insbesondere für ein Kraftfahrzeug, **dadurch gekennzeichnet, dass** es zwei Häute (12A, 12B) nach einem der Ansprüche 1 bis 6, und einen zwischen den zwei Häuten (12A, 12B) angeordneten Abstandshalter (14) aufweist.

8. Verfahren zur Herstellung einer Haut (12A, 12B) für ein Bauteil (10), **dadurch gekennzeichnet, dass** es aufweist:
- einen Schritt des Anbringens einer ersten Harzschicht (24) auf eine erste innere Fläche (16B) einer ersten Filzmatte (16),
- einen Schritt des Anordnens der ersten Filzmatte (16), welche die erste Harzschicht (24) trägt, in einer Form,
- einen Schritt des Stapelns eines Fasertuchs (28) auf der ersten Harzschicht (24) und einer zweiten Filzmatte (18) auf dem Fasertuch (28),
- einen Schritt des Komprimierens des Stapels, welcher von der ersten Filzmatte (16), der ersten Harzschicht (24), dem Tuch (28) und der zweiten Filzmatte (28) gebildet ist.

9. Verfahren zur Herstellung nach Anspruch 8, aufweisend einen Schritt des Anbringens einer zweiten Harzschicht (26) auf eine zweite innere Fläche (18B) der zweiten Filzmatte (18), wobei die zweite Harzschicht (26) zwischen dem Fasertuch (28) und der zweiten Filzmatte (18) während des Schritts des Stapelns angeordnet ist.

10. Verfahren zur Herstellung nach Anspruch 8 oder 9, wobei der Schritt des Anbringens der Harzschicht (24, 26) durch Sprühen von Harz auf der inneren Fläche (16B, 18B) der Filzmatte (16, 18) durchgeführt ist.

## Claims

1. Skin (12A, 12B) for a structural part (10), especially of a motor vehicle, comprising:
- a first felt mat (16) having a first outside surface (16A) and a first inside surface (16B), opposite one another,
- a second felt mat (18) having a second outside surface (18A) and a second inside surface (18B), opposite one another, and
- a layer of fibres (28) interposed between said first inside surface (16B) of the first felt mat (16) and said second inside surface (18B) of the second felt mat (18),
**characterised in that** at least one of the first (16) and the second (18) felt mats carries, on its inside surface (16B, 18B), a layer of resin (24, 26).

2. Skin (12A, 12B) according to claim 1, wherein at least one of the first (16) and the second (18) felt mats comprises fibres (20), preferably wood fibres, and a resin (22), preferably an acrylic resin, binding the fibres (20).

3. Skin (12A, 12B) according to claim 2, wherein at least one of the first (16) and the second (18) fibre mats comprises, by weight, from 5% to 25% resin.

4. Skin (12A, 12B) according to any one of the preceding claims, wherein each felt mat (16, 18) has a basis weight of from 300 g/m² to 800 g/m², preferably substantially equal to 600 g/m².

5. Skin (12A, 12B) according to any one of the preceding claims, wherein the layer of resin (24, 26) has a weight of from 15 to 20% of the weight of the assembly formed by the layer of resin (24, 26) and the first (16) or second (18) felt mat carrying the layer of resin (24, 26).

6. Skin (12A, 12B) according to any one of the preceding claims, wherein the layer (28) comprises long fibres, having a length greater than 20 mm.

7. Structural part (10), especially of a motor vehicle, **characterised in that** it comprises two skins (12A, 12B) according to any one of claims 1 to 6, and a spacer (14) interposed between the two skins (12A, 12B).

8. Method of producing a skin (12A, 12B) for a structural part (10), **characterised in that** it comprises:
- a step of applying a first layer of resin (24) to a first inside surface (16B) of a first felt mat (16),
- a step of arranging the first felt mat (16) carrying the first layer of resin (24) in a mould,
- a step of stacking a layer of fibres (28) on the first layer of resin (24), and a second felt mat (18) on the layer of fibres (28),
- a step of compressing the stack formed by the first felt mat (16), the first layer of resin (24), the layer (28) and the second felt mat (28).

9. Production method according to claim 8, comprising a step of applying a second layer of resin (26) to a second inside surface (18B) of the second felt mat (18), said second layer of resin (26) being interposed between the layer of fibres (28) and the second felt mat (18) during the stacking step.

10. Production method according to claim 8 or 9, wherein the step of applying the layer of resin (24, 26) is carried out by spraying resin onto the inside surface (16B, 18B) of the felt mat (16, 18).
